# EUROPEAN PATENT SPECIFICATION

(11) **EP 2 669 260 B1**
(45) Date of publication and mention of the grant of the patent: **20.07.2016**
(21) Application number: 12170085.0
(22) Date of filing: 30.05.2012
(51) Int. Cl.: C04B 38/00, C01B 31/00, C08J 9/28, C08J 9/36, C04B 35/52

(54) **Method for producing a porous carbon material and use of the porous carbon material produced by the process**
Verfahren zur Herstellung von porösem Kohlenstoffmaterial und Verwendung des herstellbaren porösen Kohlenstoffmaterials
Procédé de production d'un matériau en carbone poreux et utilisation du matériau en carbone poreux produit par le procédé

(43) Date of publication of application: 04.12.2013
(73) Proprietor: VARTA Micro Innovation GmbH, 8010 Graz (AT); Technische Universität Graz, 8010 Graz (AT)
(72) Inventor: Slugovc, Christian, 9020 Klagenfurt (AT); Kovacic, Sebastijan, 2000 Maribor (SI); Scharfegger Michaela, 8010 Graz (AT); Fuchsbichler Bernd, 8010 Graz (AT); Koller Stefan, 8010 Graz (AT)
(74) Representative: Patentanwaltskanzlei Cartagena

(56) References cited:
- NOA COHEN ET AL: "Synthesis of emulsion-templated porous polyacrylonitrile and its pyrolysis to porous carbon monoliths", POLYMER, vol. 52, no. 2, 1 January 2011 (2011-01-01), pages 282-287, XP55040964, ISSN: 0032-3861, DOI: 10.1016/j.polymer.2010.11.026
- DONG WANG ET AL: "Polymerization and carbonization of high internal phase emulsions", POLYMER INTERNATIONAL, vol. 54, no. 2, 1 February 2005 (2005-02-01), pages 297-303, XP55041167, ISSN: 0959-8103, DOI: 10.1002/pi.1672
- SEBASTIJAN KOVACIC ET AL: "Ring opening metathesis polymerisation of emulsion templated dicyclopentadiene giving open porous materials with excellent mechanical properties", POLYMER CHEMISTRY, ROYAL SOCIETY OF CHEMISTRY, GB, vol. 3, no. 2, 6 December 2011 (2011-12-06), pages 325-328, XP002681189, ISSN: 1759-9954, DOI: 10.1039/C2PY00518B [retrieved on 2011-12-06]
- ADAM F. GROSS ET AL: "Hierarchical Carbon Foams with Independently Tunable Mesopore and Macropore Size Distributions", LANGMUIR, vol. 26, no. 13, 6 July 2010 (2010-07-06), pages 11378-11383, XP55041164, ISSN: 0743-7463, DOI: 10.1021/la1007846

## Description

The present invention relates to a method for producing a porous carbon material and to the use of the porous carbon material which can be produced by the process.

### Background

Porous carbonaceous materials represent outstanding candidates for a range of applications (Subramoney S. Adv. Mater. 1998, 10, 1157-1171 (b) Manocha, S. M. Sadhana, 2003, 28, 335-348) such as water and air purification (Kyriakopoulos, G., Doulia D. Sep. Purif. Rev., 2006, 35, 97-191), adsorption (Maroldo, S. G., Betz, W. R., Borenstein N. U. S. Pat. 4839331 (1998)), catalysis ((a) Yu, J. S., Kang, S., Yoon, S. B., Chai, G. J. Am. Chem. Soc. 2002, 124, 9382-9383 (b) Planeix, J. M., Coustel, N., Coq, B., Brotons, V., Kumbhar, P. S., Dutartre, R., Geneste, P., Bernier, P., Ajayan, P. M. J. Am. Chem. Soc. 1994, 116, 7935-7936), electrodes ((a) Fan, L. Z.; Hu, Y. S.; Maier, J.; Adelhelm, P.; Smarsly, B.;Antonietti, M. Adv. Funct. Mater. 2007, 17, 3083-3087 (b) Wang, D.-W., Li, F., Liu, M., Lu, G. Q., Cheng, H.-M. Angew. Chem. Int. Ed. 2008, 47, 373-376) and energy storage materials ((a) Dillon, A. C., Jones, K. M., Bekkedahl, T. A., Kiang, C. H., Bethune, D. S., Heben, M. J. Nature 1997, 386, 377-379 (b) Biener, J., Stadermann, M., Suss, M., Worsley, M. A., Biener, M. M., Rose, K., A., Baumann, T. F. Energy Environ. Sci., 2011, 4, 656-667).

To prepare porous carbonaceous materials, hard and soft templating methods can be applied. Soft templating methods, where emulsion templating technology is one of it, lead directly to porous carbonaceous materials after carbonization and pyrolysis while hard templating methods are two step procedures where hard templates are impregnated with carbon sources that are subsequently carbonized ((a) Schuth, F. Angew. Chem. Int. Ed. 2003, 42, 3604-3622 (b) Huang, Y., Cai, H. Q., Yu, T., Zhang, F. Q., Zhang, F., Meng, Y., Gu, D., Wan, Y., Sun, X. L., Tu, B., Zhao, D. Angew. Chem. Int. Ed. 2007, 46, 1089-1093 (c) Brun, N., Prabaharan, S. R. S., Morcrette, M., Sanchez, C., Pescastaing, G., Derre, A., Soum, A., Deleuze, H., Birot, M., Backov, R. Adv. Funct. Mater., 2009, 19, 3136-3145).

High Internal Phase Emulsion (HIPE) templating is a particularly soft templating method to prepare continuously porous, fully accessible carbon structures with high pore volume (up to 10 cm³/g) and extremely low foam density (> 0.1g/cm³).

Emulsions are heterogeneous dispersions in which drops of liquid are dispersed in continuous immiscible liquid phase of different composition. The dispersed phase is usually referred to as internal phase and the continuous phase as the external phase. The simplest emulsion structures are droplets of water, in case of water-in-oil (W/O) emulsions or droplets of oil, in case of oil-in-water (O/W) emulsions. High Internal Phase Emulsions (HIPE) are an interesting class of emulsions usually characterized by an internal phase volume fraction exceeding 0.74 of total emulsion volume. The internal phase volume fraction can also vary in the range between 0.40 and 0.70. In that case, it is talked about medium internal phase emulsions (MIPE) or low internal phase emulsions (LIPE) if internal phase volume fraction goes lower than 0.40. The internal phase droplets act as a template around which polymerization occurs. After polymerization, the internal phase is removed, leaving voids in place of the internal phase droplets and thus providing a highly porous structure. These materials are known as polymerized HIPEs or poly-HIPEs.

Formation of a stable HIPE is mostly a kinetic concept while all emulsions and especially HIPEs are known as metastable thermodynamic systems. Once all parameters that govern HIPE stability are defined and achieved for a particular application, an economically attractive process for preparing the highly porous material is available. There has been carried out an intensely study of high internal phase emulsions and the basic theory behind them has been discussed (K. J. Lissant in "Surfactant Science Series", Volume 6, "Emulsion and Emulsion Technology", Part 1, edited by K. J. Lissant, Marcel Deckker Inc., N.Y., 1974).

Carbonized polyHIPEs that have been reported up to now include those derived from methacrylonitrile-divinylbenzene, resorcinol/formaldehyde, styrene-divinylbenzene and 4-vinylbenzyl chloride polymers ((a) Cohen, N., Silverstein, M. S. Polymer, 2011, 52, 282-287 (b) Even, W.R. Jr., Gregory, D.P., MRS Bulletin, 1994, 19, 29-33 (c) Edwards, C. J. C., Hitchen, D. A., Sharples, M. U. S. Pat., 4775655 (1988)).

It was an object of the present invention to establish a new method to provide porous carbon materials which is characterized by it's economical attractiveness and a tremendous stability of the carbon materials obtained by the method.

### Description of the invention

This object is achieved by the method having the features of claim 1. Preferred embodiments of the method of the invention are given in dependent claims 2 to 7. Further, the use of the porous carbon material obtained is given in claims 8-10.

The present invention provides a method for producing a porous carbon material (a carbon foam), in particular a porous carbon material suitable for the applications referred to at the outset. The method comprises at least three steps, namely
(1) The formation of an unsaturated polymer having a porous structure by ROMP (ring opening metathesis polymerization) of at least one carbonaceous monomer in a monomer phase of a monomer-water emulsion: In this step a HIPE or polyHIPE is generated by applying emulsion templating.
   The monomer-water emulsion is a monomer-in-water high internal phase emulsion, characterized by an internal phase volume fraction exceeding 0.74 of total emulsion volume. Properties and preparation of the emulsion are described later in detail.
   If appropriate the carbonaceous monomer may be employed as system of monomers that have been reacted to an intermediate molecular weight state (a prepolymer).
   The term "unsaturated" means that the formed polymer contains C - C double bonds. In preferred embodiments the polymer may consist of monomer units comprising a C - C double bond. In other preferred embodiments the polymer may contain monomer units comprising a C - C double bond.
   In general, the formed polymer may be a homopolymer consisting of chains or structures of the same monomer or a copolymer containing chains or strucures consisting of two or more different monomer units.
   In preferred embodiments the unsaturated polymer has thermoplastic properties, in other embodiments of the invention the unsaturated polymer is a thermosetting polymer.
   The term "thermoplastic" means that the formed polymer is able to turn into a liquid when heated. In contrast to this, a thermosetting polymer decomposes when heated above a decomposition temperature.
(2) The transformation of the polymer by chemical or physical treatment:
   This step is of particular importance. It is not possible to carbonize the polyHIPE obtained in step (1) directly if it has thermoplastic properties. The HIPE would melt at higher temperatures, thereby losing its porous structure. Thus it is necessary to treat the poly-HIPE chemically or physically in order to destroy its thermoplastic properties while preserving its porous structure.
   And also if the unsaturated polymer obtained in step (1) is a thermosetting polymer it is advantageous to conduct step (2) in order to preserve the porous structure.
(3) The carbonization of the transformed polymer by thermal treatment (pyrolysis).

In contrast to prior art methods the method according to the present invention provides a porous carbon material indirectly via an unsaturated polymer as intermediate product, thus offering the possibility to apply simple and cheap monomer spezies as starting material. An explicit crosslinking as described in U.S. Pat. 4775655 or the use of expensive thermosetting compounds as precursor is not mandatorily required.

The unsaturated monomer is formed by ROMP (ring opening metathesis polymerization). Olefin metathesis is a well known chemical polymerization reaction that entails the redistribution of fragments of alkenes (olefins) by the scission and regeneration of C - C double bonds. Ring-opening metathesis poly-merization (ROMP) is a type of olefin metathesis providing polymers by chain-growth polymerization, mostly driven by relief of ring strain in cyclic olefins.

In accordance with the above, the monomer comprises at least one mono- or polycyclic diene compound. The cycle(s) in the compound preferably has (have) 5 or 8 ring atoms.

The monomer comprises at least one compound selected from the group of dicyclopentadiene, norbornene, nobornadiene, cyclooctene, cyclooctadiene or a derivative thereof. A particular suitable derivative of norbornene is 5-ethylidene-2-norbornene.

The monomer phase of the emulsion may comprise one single type of polymerizable olefin monomer or more than one type thereof. It is particularly preferred that one monomer is dicyclopentadiene. Preferably the emulsion comprises at least 50%, at least 60%, at least 70%, at least 75%, at least 80%, at least 85%, at least 90%, at least 95%, or even 100% dicyclopentadiene.

According to a preferred embodiment of the present invention the monomer phase comprises dicyclopentadiene, which is combined with at least one olefin monomer selected from the group consisting of norbornen, norbornadien, cycloocten, cyclooctadien and 5- ethylidene-2-norbornene.

It is preferred that the monomer phase comprises 50% to 100%, preferably 60% to 100%, more preferably 70% to 100%, even more preferably 80% to 100%, dicyclopentadiene and 0% to 50%, preferably 0% to 40%, more preferably 0% to 30%, even more preferably 0% to 20%, of at least one polymerizable olefin monomer selected from the group consisting of norbornen, norbornadien, cycloocten, cyclooctadien and 5-ethylidene-2-norbornene.

Precursors like the above are obtainable as by-product of steam cracking of naphta and gas oils. In particular dicyclopentadiene (DCPD) is very cheap and readily available, thus keeping the cost of the overall process and the resulting porous carbon material low and attractive for the market. Further, it has been observed that carbonized polyHIPE material obtained by the method according to the present invention are characterized by a tremendous stability at high temperatures.

If a polyHIPE is prepared from a HIPE containing dicyclopentadiene in the monomer phase or a monomer phase consisting of DCPD the unsaturated polymer is regularly a thermosetting polymer.

It is preferred that the unsaturated polymer obtained in step (1) comprises C - C double bonds with at least one hydrogen in an α-position, in particular at least one tertiary hydrogen in an α-position. Such structures are easily synthesized for example by ROMP of endo-DCPD to Polydicyclopentadien. Tertiary hydrogens in α-position to a C - C double bond are easy to oxidize. The method according to the present invention is able to take advantage of this.

It has been found that it is possible to transform the unsaturated polymer obtained in step (1) easily by a simple chemical treatment, namely by an oxidative treatment. Preferably the oxidative treatment comprises subjecting the unsaturated polymer to an oxidative atmosphere. An oxidative atmosphere may be air with a volume percentage of about 21 % or an artificial atmosphere with an oxygen content of more then 21 %, up to pure oxygen atmospheres. In the presence of tertiary hydrogens in α-position to a C - C double bond the oxidative treatment is facilitated, oxygen molecules may attack easily the tertiary hydrogen atoms, thereby initiating an artificial aging process. If the unsaturated polymer has thermoplastic properties, this treatment leads finally to a complete loss of the thermoplastic properties of the treated polymer while its porous structure is preserved.

Alternative chemical treatments are applicable, for example the oxidation may be supported or effected by other oxidation means than oxygen. However, a treatment in an oxygen containing atmosphere is preferred.

In addition to or instead of the chemical treatment the transformation of the polymer obtained in step (1) may be transformed by physical treatment. For example it is possible to support said chemical processes by a thermal treatment. The chemical treatment, in particular the oxidative treatment, is preferably conducted at elevated temperatures, in particular in the range between 0 °C and 250 °C.

Further the transformation may be effected or supported by radiation, in particular radiation which is able to induce crosslinking- and other reactions of the C - C double bonds contained in the unsaturated polymer obtained in step (1). Most suitable is ultraviolet radiation.

It is preferred that by the oxidative treatment the oxygen-content in the polymer is raised to a value in the range between 25 mass-% and 40 mass-% (determined by elemental analysis), in particular between 30 mass-% and 37 mass-%, before the polymer is carbonized.

The final carbonization process comprises heating the polymer transformed in step (2) to a temperature in the range between 550 °C and 2500 °C, preferably in an oxygen-free atmosphere. For example it is possible to conduct the pyrolysis in an argon atmosphere.

Preferably the carbon-content of the porous carbon material is adjusted during carbonization to a value in the range between 95 mass-% and 99,9 mass-%, preferably between 97 and 99,9 mass-% (determined by elemental analysis).

An essential part of the method according to the present invention is the preparation of the emulsion which has already been mentioned above. As metastable thermodynamic systems the dispersed and the continuous phases of HIPEs phase-segregate within a certain time. The continuous phase of a HIPE is the minority phase in terms of volume and stabilization against internal phase coalescence is necessary. This is typically achieved by the addition of non-ionic surfactants.

It is preferred that the emulsion comprises a surfactant in the range of 0.1 vol-% to 20 vol.-%, preferably in the range of 0.1 vol-% to 10 vol.-%, in particular in the range of 0.1 vol-% to 8 vol.-% (based on the quantity of the polymerizable monomer in the emulsion).

The inventors have found that the amount of the surfactant strongly influences the mechanical properties of the porous structure of the polymer produced in step (1) whereas Young's modules were found to decrease upon increasing surfactant concentration. Using a surfactant in said ranges, in each case based on the quantity of the polymerizable monomer in the emulsion, allows obtaining porous structures with good mechanical properties (high stability) although being highly porous with tunable void sizes. The combination of good mechanical properties and tunable void sizes constitute an ideal starting point for using the porous structures in many applications.

According to a preferred embodiment of the present invention the emulsion used to obtain the unsatured polymer comprises 0.1 vol.% to 10 vol.%, 0.1 vol.% to 9 vol.%, 0.1 vol.% to 8, vol.% 0.1 vol.% to 7 vol.%, 0.2 vol.% to 10 vol.%, 0.2 vol.% to 9, vol.%, 0.2 vol.% to 8 vol.%, 0.2 vol.% to 7 vol.%, 0.2 vol.% to 6 vol.%, 0.25 vol.% to 10 vol.%, 0.25 vol.% to 9, vol.% 0.25 vol.% to 8, vol.% 0.25 vol.% to 7, vol.% 0.25 vol.% to 6, surfactant based on the quantity of the polymerizable monomer in the emulsion.

According to a further preferred embodiment the surfactant is a non-ionic surfactant. Preferably the surfactant has a molecular weight of 500 to 10000 g/mol, preferably of 1000 to 8000 g/mol, even more preferably of 2000 to 5000 g/mol. The surfactant is most preferably selected from the group consisting of poloxamers, more preferably (poly(ethylene glycol)-block-poly(propylene glycol)-block-poly(ethylene glycol).

According to a preferred embodiment of the present invention the emulsion, in particular the monomer phase of the emulsion, comprises a polymerization initiator. Polymerization initiators are known by persons skilled in the art. Preferred are polymerization initiators which are activated/active at a temperature of at least 40°C, preferably of at least 50°C, more preferably of at least 60°C.

Preferably the polymerization initiator is a ruthenium carbene metathesis initiator. According to a preferred embodiment of the present invention the metal carbene metathesis initiator/catalyst is selected from the group consisting of
- (H₂IMes)(PCy₃)Cl₂Ru(3-phenyl-indenylid-1-ene) (M2, H₂IMes = N,N-bis(mesityl) 4,5-dihydroimidazol-2-yl and
- (SPY-5-34)-dichlor-(K2(C,O)-(2-iso-propylester-5-methoxybenzylide-ne)-(1,3-bis(2,4,6-trimethyphenyl)-4,5-dihydroimidazol-2-ylidene)-ruthenium and combinations thereof.

The emulsion, in particular the monomer phase of the emulsion, may comprise additional components which may influence the properties of the produced porous carbon material (functional fillers), in particular in a content of 0.1 to 30 % (based on the quantity of the polymerizable monomer in the emulsion). For example it is possible that the emulsion contains carbon black, carbon nanotubes or metallic particles in order to increase the electric conductivity of the carbon material to be produced. It is further possible that the emulsion contains particles having a catalytic activity, for example platinum or iron particles.

The emulsion may also contain additional components which may not influence the properties of the produced porous carbon material (structural fillers), preferably in a content of 0.1 to 30 % (based on the quantity of the polymerizable monomer in the emulsion.

It is preferred that the polymerization of the at least one carbonaceous monomer is performed at a temperature between 40°C and 99°C, preferably between 45°C and 95°C, more preferably between 50°C and 90°C, even more preferably between 70°C and 85°C, in particular at a temperature of 80°C. After the polymerization of the emulsion the polymer is cured at a temperature of more than 40°C, preferably of more than 65°C, even more preferred of more than 80°C. The maximum curing temperature should not exceed 99°C.

The polymerization can be carried out in a mould in order to prepare polyHIPEs of a predefined shape. Due to the extraordinary stability of the carbonized polyHIPE material it is even possible to produce membranes having a thickness of less then 100 µm or even less the 50 µm.

The carbon material produced by the method of claim 1 is characterised by its pore structure, in particular by the dimensions of voids (pores) contained in the material and connections between adjacent voids (so called windows). The form of the voids corresponds essentially to the form of water droplets (the dispersed phase) in the monomer-water emulsion before and during polymerization. The connections between the adjacent voids are holes formed during curing.

It is preferred that the total pore volume of the porous carbon material in respect to the overall volume of the at least one polymerizable monomer varies from 40% to 99%, preferably from 50% to 98%, more preferably from 70% to 97%, even more preferably from 80% to 95%.

It is preferred that the average size of the voids in the porous carbon material exceeds 2 µm, preferably 5 µm. More preferred are voids having an average void size of of more than 7.5 µm, preferably more than 9 µm. According to a further preferred embodiment of the present invention the voids have an average void size of 2 to 150 µm, preferably of 7.5 to 150 µm, more preferably of 9 to 130 µm, even more preferably of 10 to 120 µm.

The inventors have determined that void and window sizes of the pyrolysed polyHIPE can be tuned from 2.6 µm upon 80 µm by varying the amount of the surfactant during the HIPE preparation from 0.25 up to 10 vol.%, preferably from 0.1 vol.% to 8 vol.%, (the percentage values in each case are based on the quantity of the polymerizable monomer in the HIPE).

The voids (pores) of the porous carbon material preferably have an average window size between 0.5 µm and 50 µm, preferably between 1 and 40 µm, more preferably between 1 and 25 µm, even more preferably between 1 and 20 µm, 1 and 10 µm, 1 and 5 µm.

According to a preferred embodiment of the present invention the elastic modulus of the porous carbon material before pyrolysis in step (3) is between 25 and 1000 MPa, preferably between 60 and 150 MPa, preferably between 70 and 1000 MPa, more preferably between 80 and 400 MPa, even more preferably between 90 and 900 MPa, most preferably between 95 and 900 MPa. The elastic modulus was determined by stress strain tests of shouldered test bars according to Polym Chem 3 (2012), 325-328.

Elemental analysis of the pyrolized sample provided a high degree of the carbonization of up to 99 mass-%.

Preliminary conductivity measurements showed a conductivity of at least 1 Ωcm, preferably of about 2.5Ωcm or above. This offers the possibility to utilize the porous carbon material produced by the method of claim 1 in particular as a conducting matrix of electrodes for electrochemical cells.

The porous carbon material is particular suitable for such application if it contains at least one of the above mentioned functional or structural fillers, preferably in a content of 0.1 mass-% to 50 mass-%.

The porous carbon material is preferably characterized by void sizes in the range of 100 - 2 µm and a carbon content of 95-99.9%

Such electrochemical cells comprise an electrochemical material which is deposited in the voids. In particular the material is suitable for rechargeable lithium-ion-batteries.

In a preferred embodiment the carbon material produced by the method of claim 1 is in the form of a membrane or a coating, in particular a membrane or a coating having a thickness of less then 100 µm or even less the 50 µm. An average thickness in the range between 10 µm and 100 µm, preferably between 10 µm and 50 µm, is particularly preferred.

The present invention is further illustrated by the following figures and examples, however, without being restricted thereto.

### Detailed description of the invention

### Examples

The following is an example of the preparation of a low density, openporous microcellular crosslinked pyrolysed polymeric foam material according to the invention.

### 1.1 Synthesis of polymer embodiment (polyHIPE) by ring opening metathesis polymerization from a water-in-oil high internal phase emulsion stabilized by 0.25 volume percent of surfactant used.

8.00 mL (60 mmol) of dicyclopentadien (Sigma-Aldrich) and 0.02 mL (4.5·10-3 mmol) surfactant Pluronic® 121 (poly(ethylene glycol)-block-poly(propylene glycol)-block-poly(ethylene glycol); Mₙ = 4400 gmol⁻¹; *Sigma-Aldrich)* were placed in reactor. The mixture of the two components was stirred with an overhead stirrer at 400 rpm. 33 mL of deionised water was added drop wise under constant stirring. After addition of the water the mixture was stirred for another hour until a uniform emulsion was produced. A solution comprising an initiator (8 mg (8.4·10-3 mmol) of the initiator M2 dissolved in 1 mL of toluene; Sigma-Aldrich) was added to the emulsion at the end of stirring. The resulting HIPE was transferred into a mould (whatever (monolith, beads, membranes or wire) shape is desired) and heated at 80°C. After 4h of curing, white and mechanical stable polyHIPE was obtained which was purified via Soxhlet extraction using a sequence of dichloromethane and acetone and was dried in vacuum. Dried embodiment was left for the oxidation under ambient conditions that was completed after four weeks (% O = 28.18). Oxidized embodiment was pyrolysed at 900 °C in Argon for 2h.

### 1.2 Synthesis of polymer embodiment (polyHIPE) by ring opening metathesis polymerization from a water-in-oil high internal phase emulsion stabilized by 1 volume percent of surfactant used.

8.00 mL (60 mmol) of dicyclopentadien (Sigma-Aldrich) and 0.084 mL (1.9·10-2 mmol) surfactant Pluronic® 121 (poly(ethylene glycol)-block-poly(propylene glycol)-block-poly(ethylene glycol); Mₙ = 4400 gmol⁻¹; *Sigma-Aldrich)* were placed in reactor. The mixture of the two components was stirred with an overhead stirrer at 400 rpm. 33 mL of deionised water was added drop wise under constant stirring. After addition of the water the mixture was stirred for another hour until a uniform emulsion was produced. A solution comprising an initiator (8 mg (8.4·10-3 mmol) of the initiator M2 dissolved in 1 mL of toluene; Sigma-Aldrich) was added to the emulsion at the end of stirring. The resulting HIPE was transferred into a mould (whatever (monolith, beads, membranes or wire) shape is desired) and heated at 80°C. After 4h of curing, white and mechanical stable polyHIPE was obtained which was purified via Soxhlet extraction using a sequence of dichloromethane and acetone and was dried in vacuum. Dried embodiment was left for the oxidation under ambient conditions that was completed after four weeks (% O = 31.54). Oxidized embodiment was pyrolysed at 900 °C in Argon for 2h.

### 1.3 Synthesis of polymer embodiment (polyHIPE) by ring opening metathesis polymerization from a water-in-oil high internal phase emulsion stabilized by 3 volume percent of surfactant used.

8.00 mL (60 mmol) of dicyclopentadien (Sigma-Aldrich) and 0.248 mL (5.7·10-2 mmol) surfactant Pluronic® 121 (poly(ethylene glycol)-block-poly(propylene glycol)-block-poly(ethylene glycol); Mₙ = 4400 gmol⁻¹; *Sigma-Aldrich)* were placed in reactor. The mixture of the two components was stirred with an overhead stirrer at 400 rpm. 33 mL of deionised water was added drop wise under constant stirring. After addition of the water the mixture was stirred for another hour until a uniform emulsion was produced. A solution comprising an initiator (8 mg (8.4·10-3 mmol) of the initiator M2 dissolved in 1mL of toluene; Sigma-Aldrich) was added to the emulsion at the end of stirring. The resulting HIPE was transferred into a mould (whatever (monolith, beads, membranes or wire) shape is desired) and heated at 80°C. After 4h of curing, white and mechanical stable polyHIPE was obtained which was purified via Soxhlet extraction using a sequence of dichloromethane and acetone and was dried in vacuum. Dried embodiment was left for the oxidation under ambient conditions that was completed after four weeks (% O = 30.57). Oxidized embodiment was pyrolysed at 900 °C in Argon for 2h.

### 1.4 Synthesis of polymer embodiment (polyHIPE) by ring opening metathesis polymerization from a water-in-oil high internal phase emulsion stabilized by 5 volume percent of surfactant used.

8.00 mL (60 mmol) of dicyclopentadien (Sigma-Aldrich) and 0.427 mL (9.8·10-2 mmol) surfactant Pluronic® 121 (poly(ethylene glycol)-block-poly(propylene glycol)-block-poly(ethylene glycol); Mₙ = 4400 gmol⁻¹; *Sigma-Aldrich)* were placed in reactor. The mixture of the two components was stirred with an overhead stirrer at 400 rpm. 33 mL of deionised water was added drop wise under constant stirring. After addition of the water the mixture was stirred for another hour until a uniform emulsion was produced. A solution comprising an initiator (8 mg (8.4·10-3 mmol) of the initiator M2 dissolved in 1mL of toluene; Sigma-Aldrich) was added to the emulsion at the end of stirring. The resulting HIPE was transferred into a mould (whatever (monolith, beads, membranes or wire) shape is desired) and heated at 80°C. After 4h of curing, white and mechanical stable polyHIPE was obtained which was purified via Soxhlet extraction using a sequence of dichloromethane and acetone and was dried in vacuum. Dried embodiment was left for the oxidation under ambient conditions that was completed after four weeks (% O = 31.18). Oxidized embodiment was pyrolysed at 900 °C in Argon for 2h.

### 1.5 Synthesis of polymer embodiment (polyHIPE) by ring opening metathesis polymerization from a water-in-oil high internal phase emulsion stabilized by 7 volume percent of surfactant used.

8.00 mL (60 mmol) of dicyclopentadien (Sigma-Aldrich) and 0.610 mL (1.4·10-1 mmol) surfactant Pluronic® 121 (poly(ethylene glycol)-blockpoly(propylene glycol)-block-poly(ethylene glycol); Mₙ = 4400 gmol⁻¹; *Sigma-Aldrich)* were placed in reactor. The mixture of the two components was stirred with an overhead stirrer at 400 rpm. 33 mL of deionised water was added drop wise under constant stirring. After addition of the water the mixture was stirred for another hour until a uniform emulsion was produced. A solution comprising an initiator (8 mg (8.4·10-3 mmol) of the initiator M2 dissolved in 1mL of toluene; Sigma-Aldrich) was added to the emulsion at the end of stirring. The resulting HIPE was transferred into a mould (whatever (monolith, beads, membranes or wire) shape is desired) and heated at 80°C. After 4h of curing, white and mechanical stable polyHIPE was obtained which was purified via Soxhlet extraction using a sequence of dichloromethane and acetone and was dried in vacuum. Dried embodiment was left for the oxidation under ambient conditions that was completed after four weeks (% O = 33.56). Oxidized embodiment was pyrolysed at 900 °C in Argon for 2h.

### 1.6 Synthesis of polymer embodiment (polyHIPE) by ring opening metathesis polymerization from a water-in-oil high internal phase emulsion stabilized by 10 volume percent of surfactant used.

8.00 mL (60 mmol) of dicyclopentadien (Sigma-Aldrich) and 0.890 mL (2.0·10-1 mmol) surfactant Pluronic® 121 (poly(ethylene glycol)-blockpoly(propylene glycol)-block-poly(ethylene glycol); Mₙ = 4400 gmol⁻¹; *Sigma-Aldrich)* were placed in reactor. The mixture of the two components was stirred with an overhead stirrer at 400 rpm. 33 mL of deionised water was added drop wise under constant stirring. After addition of the water the mixture was stirred for another hour until a uniform emulsion was produced. A solution comprising an initiator (8 mg (8.4·10-3 mmol) of the initiator M2 dissolved in 1 mL of toluene; Sigma-Aldrich) was added to the emulsion at the end of stirring. The resulting HIPE was transferred into a mould (whatever (monolith, beads, membranes or wire) shape is desired) and heated at 80°C. After 4h of curing, white and mechanical stable polyHIPE was obtained which was purified via Soxhlet extraction using a sequence of dichloromethane and acetone and was dried in vacuum. Dried embodiment was left for the oxidation under ambient conditions that was completed after four weeks (% O = 34.87). Oxidized embodiment was pyrolysed at 900 °C in Argon for 2h.

### 1.7 Synthesis of polymer embodiment (polyHIPE) by ring opening metathesis polymerization from a water-in-oil high internal phase emulsion stabilized by 1 volume percent of surfactant and 15 wt% of oleic acid coated γFe₂O₃/Fe₃O₄ nanoparticles used.

8.00 mL (60 mmol) of dicyclopentadien (Sigma-Aldrich), 0.084 mL (1.9·10-2 mmol) surfactant Pluronic® 121 (poly(ethylene glycol)-block-poly(propylene glycol)-block-poly(ethylene glycol); Mₙ = 4400 gmol⁻¹; *Sigma-Aldrich)* and 1.4 g of coated iron nanoparticles were placed in reactor. The mixture of the three components was stirred with an overhead stirrer at 400 rpm. 33 mL of deionised water was added drop wise under constant stirring. After addition of the water the mixture was stirred for another hour until a uniform emulsion was produced. A solution comprising an initiator (8 mg (8.4·10-3 mmol) of the initiator M2 dissolved in 1mL of toluene; Sigma-Aldrich) was added to the emulsion at the end of stirring. The resulting HIPE was transferred into a mould (whatever (mono-lith, beads, membranes or wire) shape is desired) and heated at 80°C. After 4h of curing, brown and mechanical stable polyHIPE was obtained which was purified via Soxhlet extraction using a sequence of dichloro-methane and acetone and was dried in vacuum. Dried embodiment was left for the oxidation under ambient conditions that was completed after four weeks (% O = 31.45). Oxidized embodiment was pyrolysed at 900 °C in Argon for 2h.

Pyrolization experiments: All pyrolization experiments were conducted at 900 °C under an argon atmosphere. The temperature was raised up to this value with a heating rate of 10°C/min. The temperature of 900 °C was maintained over 2 hours.

The correlation between void and window sizes of the pyrolysed poly-HIPE and the amount of the surfactant during the HIPE preparation is illustrated in the following table:

| **pDCDP₈₀** | Surf. Amount [vol.%] | av. void size after carbonization [µm] | av. window after carbonaization size [µm] | Mass loss upon carbonization [%] | Elem. Anal. C/H/N [%] |
|---|---|---|---|---|---|
| Example 1 | 0.25 | 80 | 13.6 | 30+/-3 | 98.0/0.57/0.29 |
| Example 2 | 1 | 35 | 7.8 | 30+/-3 | 98/0.5/0.29 |
| Example 3 | 3 | 12 | 3.6 | 30+/-3 | 96.1/0.61/0.58 |
| Example 4 | 5 | 5.7 | 2.2 | 30+/-3 | 96.5/0.65/0.53 |
| Example 5 | 7 | 4.2 | 1.1 | 30+/-3 | 95.7/0.57/0.71 |
| Example 6 | 10 | 2.6 | 0.6 | 30+/-3 | 96.4/0.65/0.63 |

The material undergoes major dimensional shrinkage (by factor of 1.7). The pyrolysis (temp.program 900°C, 2h) leads to 30% of weight loss. Elemental analysis of the pyrolized sample provided a high degree of the carbonization. Preliminary conductivity measurements showed a conductivity of 2.5Ωcm.

### Figures

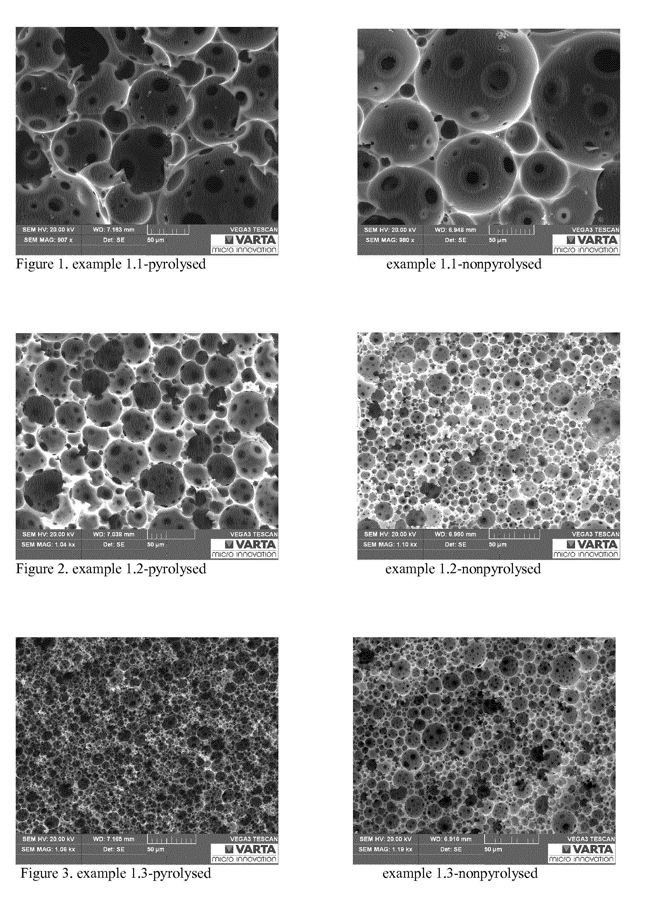

- Fig. 1: shows SEM images of a polyHIPE prepared according to example 1.1 and of the carbon material obtained by pyrolysis of the poly-HIPE.
- Fig. 2: shows SEM images of a polyHIPE prepared according to example 1.2 and of the carbon material obtained by pyrolysis of the poly-HIPE.
- Fig. 3: shows SEM images of a polyHIPE prepared according to example 1.3 and of the carbon material obtained by pyrolysis of the poly-HIPE.

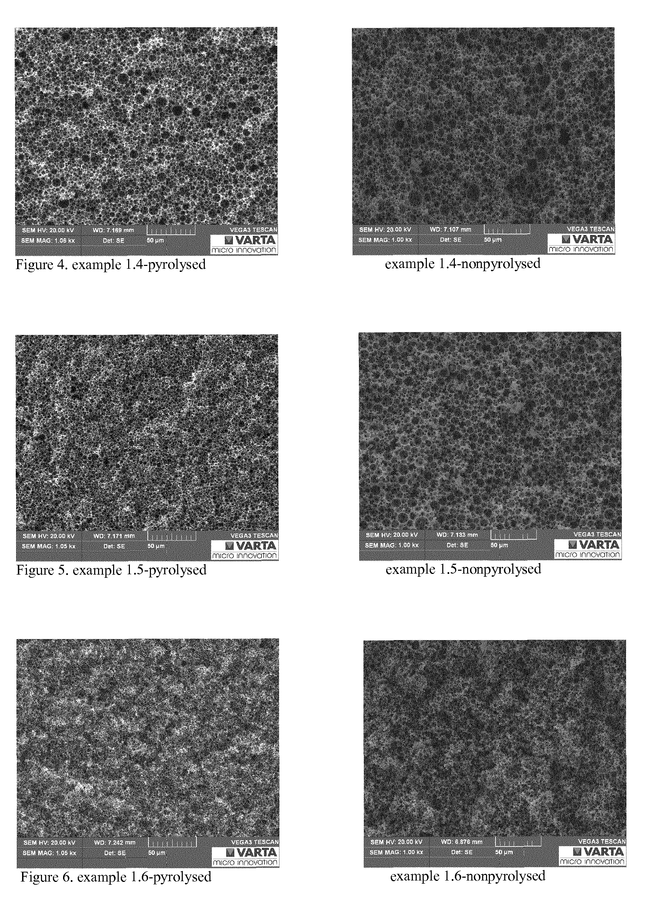

- Fig. 4: shows SEM images of a polyHIPE prepared according to example 1.4 and of the carbon material obtained by pyrolysis of the poly-HIPE.
- Fig. 5: shows SEM images of a polyHIPE prepared according to example 1.5 and of the carbon material obtained by pyrolysis of the poly-HIPE.
- Fig. 6: shows SEM images of a polyHIPE prepared according to example 1.6 and of the carbon material obtained by pyrolysis of the poly-HIPE.

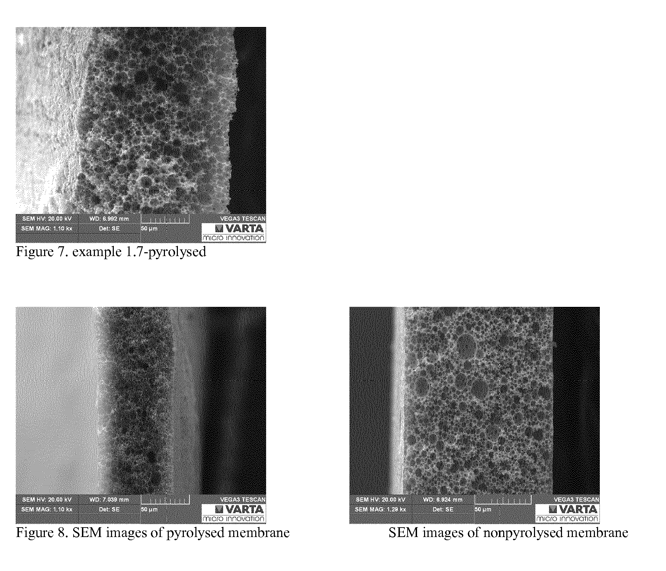

- Fig. 7: shows an SEM image of an iron filled PolyHIPE membrane prepared according to example 1.7 and carbonized.
- Fig. 8: shows a SEM image of membrane consisting of a polyHIPE prepared according to a method of the present invention and a SEM image of the membrane after pyrolysis.

## Claims

1. Method for producing a porous carbon material, wherein an unsaturated polymer having a porous structure is formed by ROMP (ring opening metathesis polymerization)of at least one carbonaceous monomer in a monomer phase of a monomer-in-water high internal phase emulsion, wherein the monomer phase comprises at least one mono- or polycyclic diene compound selected from the group of dicyclopentadiene, norbornene, nobornadiene, cyclooctene, cyclooctadiene or a derivative thereof the polymer is transformed by chemical and/or physical treatment and the transformed polymer is carbonized by thermal treatment.

2. Method according to claim 1, wherein the unsaturated polymer comprises C - C double bonds with at least one oxidizable hydrogen in an alpha-position.

3. Method according to one of the preceding claims, wherein the unsaturated polymer is transformed by an oxidative treatment.

4. Method according to claim 3, wherein the unsaturated polymer is subjected to an oxidative atmosphere, preferably at temperatures in the range between 0 °C and 250 °C.

5. Method according to one of claims 3 or 4, wherein by the oxidative treatment the oxygen-content in the polymer (determined by elemental analysis) is raised to a value in the range between 25 mass-% and 40 mass-%. (before the polymer is carbonized)

6. Method according to one of the preceding claims, wherein the carbonization comprises heating the transformed polymer to a temperature in the range between 550 °C and 2500 °C, preferably in an oxygen-free atmosphere.

7. Method according to one of the preceding claims, wherein the emulsion comprises a surfactant in the range of 0.1 vol-% to 8 vol.-% (based on the quantity of the polymerizable monomer in the emulsion).

8. Use of porous carbon material (a carbon foam), produced by a method according to one of the preceding claims as a conducting matrix of an electrode for an electrochemical cell.

9. Use according to claim 8, wherein the porous carbon material contains 0.1 mass-% to 50 mass-% of a structural or functional filler.

10. Use according to one of claims 8 or 9, **characterized in that** the porous carbon material has void sizes in the range of 100 - 2 µm and a carbon content of 95-99.9%.

## Patentansprüche

1. Verfahren zur Herstellung eines porösen Kohlenstoffmaterials, wobei ein ungesättigtes Polymer mit einer porösen Struktur durch Ringöffnungsmetathese-Polymerisation (Ring-Opening Metathesis Polymerisation, ROMP) aus mindestens einem kohlenstoffhaltigen Monomer in einer Monomerphase einer Monomer-in-Wasser-Emulsion mit hohem Anteil an innerer Phase, wobei die Monomerphase mindestens eine mono- oder polycyclische Dienverbindung ausgewählt aus der Gruppe Dicyclopentadien, Norbornen, Nobornadien, Cycloocten, Cyclooctadien oder ein Derivat davon umfasst, gebildet wird, das Polymer durch chemische und/oder physikalische Behandlung umgesetzt wird und das umgesetzte Polymer durch thermische Behandlung karbonisiert wird.

2. Verfahren nach Anspruch 1, wobei das ungesättigte Polymer C=C-Doppelbindungen mit mindestens einem oxidierbaren Wasserstoffatom in einer α-Stellung umfasst.

3. Verfahren nach einem der vorhergehenden Ansprüche, wobei das ungesättigte Polymer durch eine oxidative Behandlung umgesetzt wird.

4. Verfahren nach Anspruch 3, wobei das ungesättigte Polymer einer oxidativen Atmosphäre ausgesetzt wird, vorzugsweise bei Temperaturen im Bereich von 0 °C bis 250 °C.

5. Verfahren nach einem der Ansprüche 3 oder 4, wobei der Sauerstoffgehalt im Polymer (mittels Elementanalyse bestimmt) durch die oxidative Behandlung auf einen Massenanteil im Bereich von 25 % bis 40 % erhöht wird, bevor das Polymer karbonisiert wird.

6. Verfahren nach einem der vorhergehenden Ansprüche, wobei die Karbonisierung das Erhitzen des umgesetzten Polymers auf eine Temperatur im Bereich von 550 °C bis 2500 °C, vorzugsweise in einer sauerstofffreien Atmosphäre, umfasst.

7. Verfahren nach einem der vorhergehenden Ansprüche, wobei die Emulsion ein Tensid mit einem Volumenanteil im Bereich von 0,1 % bis 8 % (basierend auf der Menge des polymerisierbaren Monomers in der Emulsion) umfasst.

8. Verwendung eines porösen Kohlenstoffmaterials (ein Kohlenstoffschaum), hergestellt durch ein Verfahren nach einem der vorhergehenden Ansprüche, als leitfähige Matrix einer Elektrode für eine elektrochemische Zelle.

9. Verwendung nach Anspruch 8, wobei das poröse Kohlenstoffmaterial einen Massenanteil von 0,1 % bis 50 % eines strukturellen oder funktionalen Füllstoffs enthält.

10. Verwendung nach einem der Ansprüche 8 oder 9, **dadurch gekennzeichnet, dass** das poröse Kohlenstoffmaterial Hohlraumgrößen im Bereich von 100 - 2 µm und einen Kohlenstoffgehalt von 95-99,9 % aufweist.

## Revendications

1. Procédé de production d'un matériau en carbone poreux, dans lequel un polymère insaturé ayant une structure poreuse est formé en soumettant à une polymérisation par ouverture de cycle par métathèse (ROMP) au moins un monomère carboné dans une phase monomère d'une émulsion de monomère dans l'eau à phase interne hautement concentrée, la phase monomère comprenant au moins un composé diène monocyclique ou polycyclique sélectionné dans le groupe constitué du dicyclopentadiène, du norbornène, du nobornadiène, du cyclooctène, du cyclooctadiène ou d'un dérivé de ceux-ci, le polymère est transformé par un traitement chimique et/ou physique, et le polymère transformé est carbonisé par un traitement thermique.

2. Procédé selon la revendication 1, dans lequel le polymère insaturé comprend des doubles liaisons C-C avec au moins un atome d'hydrogène oxydable en position alpha.

3. Procédé selon l'une des revendications précédentes, dans lequel le polymère insaturé est transformé par un traitement oxydant.

4. Procédé selon la revendication 3, dans lequel le polymère insaturé est exposé à une atmosphère oxydante, préférablement à des températures de 0 à 250 °C.

5. Procédé selon l'une des revendications 3 ou 4, dans lequel la teneur en oxygène dans le polymère (déterminée par analyse élémentaire) est augmentée par le traitement oxydant jusqu'à une valeur de 25 %mass à 40 %mass (avant la carbonisation du polymère).

6. Procédé selon l'une des revendications précédentes, dans lequel la carbonisation comprend un chauffage du polymère transformé jusqu'à une température de 550 °C à 2 500 °C, préférablement dans une atmosphère ne contenant pas d'oxygène.

7. Procédé selon l'une des revendications précédentes, dans lequel l'émulsion comprend un tensioactif dans une quantité de 0,1 %vol à 8 %vol (relativement à la quantité du monomère polymérisable dans l'émulsion).

8. Utilisation d'un matériau en carbone poreux (une mousse de carbone), produit par un procédé selon l'une des revendications précédentes, comme matrice conductrice d'une électrode pour une cellule électrochimique.

9. Utilisation selon la revendication 8, dans laquelle le matériau en carbone poreux contient 0,1 %mass à 50 %mass d'une charge structurale ou fonctionnelle.

10. Utilisation selon l'une des revendications 8 ou 9, **caractérisée en ce que** le matériau en carbone poreux a des tailles de vides de 100 µm à 2 µm et une teneur en carbone de 95 % à 99,9 %.
